# EUROPEAN PATENT SPECIFICATION

(11) **EP 3 080 405 B1**
(45) Date of publication and mention of the grant of the patent: **07.10.2020**
(21) Application number: 14808993.1
(22) Date of filing: 05.12.2014
(51) Int. Cl.: F01D 15/04, F01D 25/28, F02C 3/04, F02C 7/143

(54) **GAS TURBINE OFFSHORE INSTALLATIONS**
OFFSHORE-ANLAGEN MIT GASTURBINEN
INSTALLATIONS DE TURBINE À GAZ EN MER

(30) Priority: 09.12.2013 IT FI20130297
(43) Date of publication of application: 19.10.2016
(73) Proprietor: Nuovo Pignone S.r.l., 50127 Florence (IT)
(72) Inventor: MARCUCCI, Daniele, 50127 Florence (IT); CARMIGNANI, Massimo, 50127 Florence (IT); CAPANNI, Francesco, 50127 Florence (IT); KAY, Ian Paul, West Chester, Ohio 45069 (US); BIANCHI, Paolo, 50127 Florence (IT)
(74) Representative: BRP Renaud & Partner mbB Rechtsanwälte Patentanwälte Steuerberater
(86) International application number: PCT/EP2014/076761
(87) International publication number: WO 2015/086464

(56) References cited:
- EP-A2- 2 196 431
- GB-A- 1 486 527
- US-A1- 2006 254 281
- US-B1- 6 250 244
- Michael Reale: "GE Energy: New High Efficiency Simple Cycle Gas Turbine - GE's LMS100(TM)", , 1 January 2004 (2004-01-01), XP055177016, Retrieved from the Internet: URL:http://site.ge-energy.com/prod_serv/pr oducts/tech_docs/en/downloads/ger4222a.pdf [retrieved on 2015-03-16]

## Description

### FIELD OF THE INVENTION

The present disclosure relates to gas turbine installations and systems, and more specifically to offshore gas turbine systems, for example for power generation or mechanical drive applications.

### DESCRIPTION OF THE RELATED ART

US 2006/254281 A1 discloses supplying power to a remote load by coupling a gas turbine engine to a vessel.

Gas turbines, in particular aeroderivative gas turbines, are often used as prime movers on offshore installations for power generation and mechanical drive applications.

Mechanical power generated by the gas turbine is used to drive an electric generator providing electric power to the offshore system and/or for driving other rotary equipment, such as turbo-compressors. In oil and gas applications, gas turbines are used on offshore installations for driving compressors of LNG systems, used for liquefying natural gas for subsequent transportation.

One of the main concerns in offshore applications of gas turbines is the need for concentrating high specific power in reduced available spaces. The footprint of a gas turbine installation becomes a critical aspect of an offshore gas turbine system.

Continuous efforts have been made to improve the efficiency of the gas turbine systems and increasing the specific power delivered by the system reducing at the same time the overall dimension and footprint of the gas turbine installation.

### SUMMARY OF THE INVENTION

According to one aspect, the present disclosure relates to an off-shore gas turbine system comprising a structure, in particular a floating structure, e.g. a vessel or an offshore platform, with at least one deck and a baseplate mounted on the deck. The baseplate supports a gas turbine. The gas turbine comprises: a low pressure compressor, a high pressure compressor, a combustor, a high pressure turbine, an intermediate pressure turbine and a low pressure turbine. The low pressure compressor is driven into rotation by the intermediate pressure turbine and the high pressure compressor is driven by the high pressure turbine; the low pressure turbine has a load coupling. The baseplate further supports at least one driven equipment mechanically connected to the load coupling of the low pressure turbine and driven into rotation by said low pressure turbine.

Moreover, an intercooler is provided between the low pressure compressor and the high pressure compressor. Air at a first pressure value delivered by the low pressure compressor flows through the intercooler before being delivered to the high pressure compressor. The baseplate is supported on the deck separately from the intercooler, i.e. the intercooler is not placed on the baseplate, but either on the deck directly, or with the interposition of a different baseplate or structure. In other embodiments, the intercooler is located on a different deck, for example a lower deck, placed under the deck where the baseplate and the gas turbine are located. Moreover, the intercooler is connected to an exit diffuser scroll case of the low pressure compressor and to an inlet collector scroll case of the high pressure compressor through respective displacement-tolerant fluid connections.

Features and embodiments are disclosed here below and are further set forth in the appended claims, which form an integral part of the present description. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig.1 illustrates a functional schematic diagram of the gas turbine components;
Fig.2 illustrates a top view of the gas turbine system in one embodiment;
Fig.2A illustrates a partial side view according to line IIA-IIA of Fig.2;
Figs 3 to 12 schematically illustrate different layouts of the gas turbine and relevant rotary equipment driven thereby;
Fig.13 illustrates a schematic top view of a vessel, whereon two gas turbine systems are arranged; and
Figs.14-17 illustrate further layouts of a gas turbine arrangement according to the present disclosure.

### DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

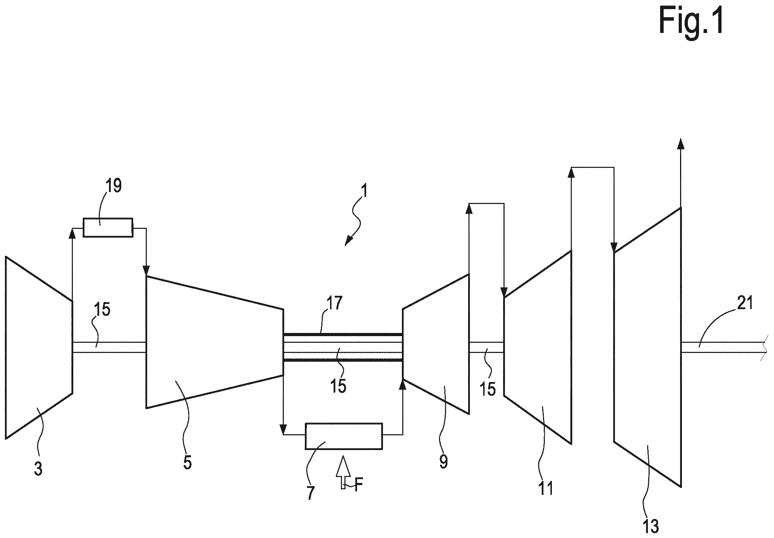

Fig. 1 schematically illustrates the main components of a gas turbine of the system according to the present disclosure. The gas turbine is designated 1 as a whole. In some embodiments, the gas turbine 1 comprises a low pressure compressor 3, a high pressure compressor 5, a combustor 7, a high pressure turbine 9, an intermediate pressure turbine 11, and a low pressure or power turbine 13. The low pressure compressor 3 is driven into rotation by the intermediate pressure turbine 11. The rotor of the low pressure compressor 3 and the rotor of the intermediate pressure turbine 11 are connected by a first shaft 15. The high pressure compressor 5 is driven into rotation by the high pressure turbine 9. The rotor of the high pressure compressor 5 is connected to the rotor of the high pressure turbine 9 by a second shaft 17, which is hollow and where through the first shaft 15 extends for connection of the low pressure compressor with the intermediate pressure turbine.

Between the low pressure compressor 3 and the high pressure compressor 5 an intercooler 19 is provided. Combustion air delivered by the low pressure compressor 3 is cooled in the intercooler 19, e.g. by heat exchange against water or air, before being delivered to the high pressure compressor 5, in order to increase the air density and thus reduce the amount of work required by the high pressure compressor 5 to achieve the final combustion air pressure.

A load coupling 21 can be provided at the hot end of the gas turbine 1, i.e. the end where the low pressure or power turbine 13 is arranged. The load coupling 21 is driven into rotation by the low pressure or power turbine 13.

The gas turbine 1 described so far operates as follows. Ambient air is ingested by the low pressure compressor 3 and compressed up to a first pressure level. Partly compressed air is delivered through the intercooler 19 before being delivered to the high pressure compressor 5. The temperature of the air flow is thus reduced and the density thereof is increased, so that the power required for further compression by the high pressure compressor 5 is reduced.

Partly compressed and cooled air is then delivered to the suction side of the high pressure compressor 5, compressed to the final pressure and delivered to the combustor 7. Fuel F is added to the air and the mixture air/fuel is ignited to generate hot and pressurized combustion gas. The combustion gas is expanded sequentially in the high pressure turbine 9, the intermediate pressure turbine 11 and the low pressure or power turbine 13. In each turbine a part of the energy of the gas expanding there through is converted into useful mechanical energy, made available on the respective shafts.

The mechanical power generated by the high pressure turbine 9 is entirely exploited for driving the high pressure compressor 5, while mechanical power generated by the intermediate pressure turbine 11 is entirely used for driving the low pressure compressor 3.

The mechanical power generated by the low pressure turbine or power turbine 13 is made available on the load coupling 21 for driving a driven equipment, not shown in Fig.1. In some embodiments the driven equipment comprises an electric generator. In other embodiments, the driven equipment comprises one or more compressors. The driven equipment can include any other equipment requiring mechanical power to be operated. The same gas turbine can drive more than one rotary machine, for instance one or more compressors and/or one or more generators. One or more speed manipulating devices, e.g. gearboxes can be provided on the shaft line connecting the power turbine 13 with the driven equipment, between the gas turbine and the driven equipment and/or between sequentially arranged rotary machines driven by the same gas turbine, so that the speed of the various rotating machines can be different.

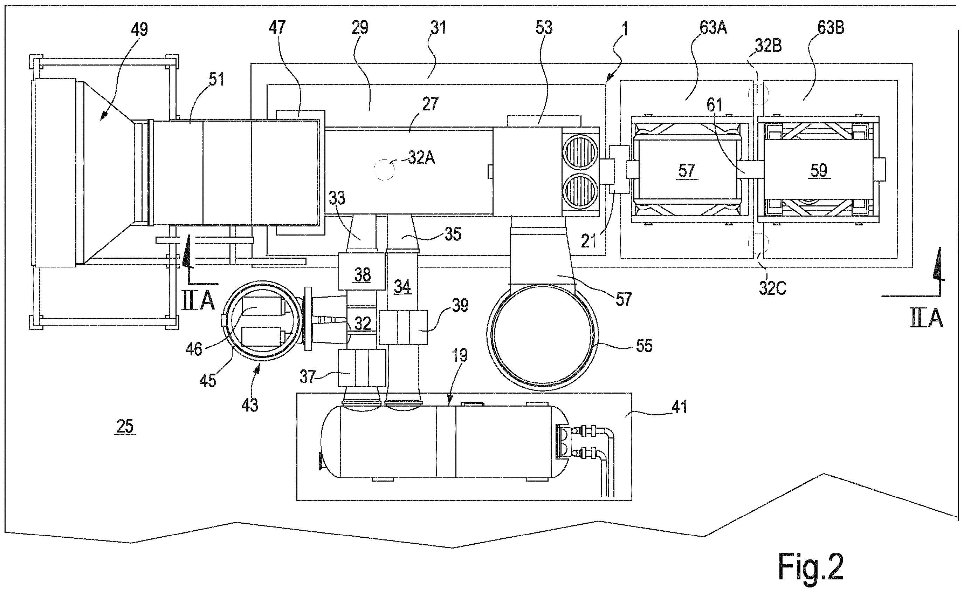

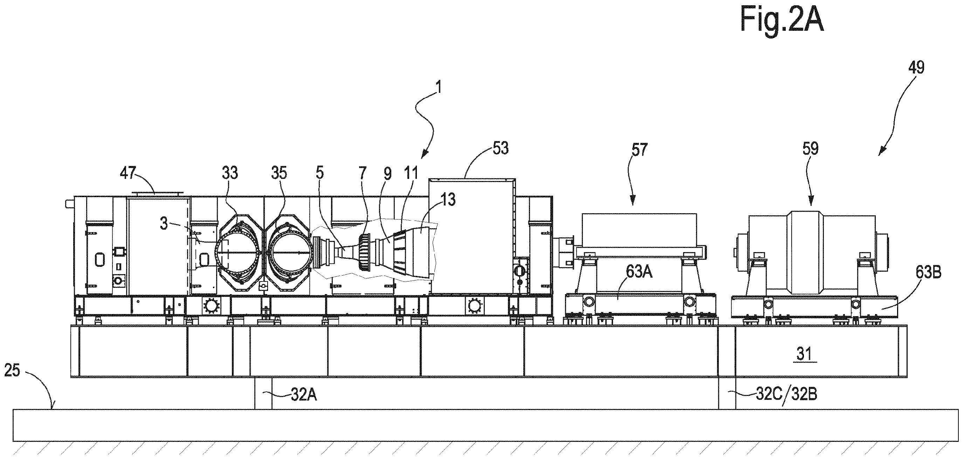

Fig. 2 schematically illustrates a top view of a gas turbine arrangement and relevant load driven thereby, located on a deck 25 of a floating structure. The floating structure can be an offshore platform. In other embodiments, the floating structure can be a vessel or a ship. The main components of the gas turbine 1 shown in Fig.2 are labeled with the same reference numbers used in Fig. 1.

The gas turbine 1 can be housed in an enclosure 27 which is in turn supported on the deck 25. In some embodiments the gas turbine 1 and relevant enclosure 27 are supported by a gas turbine platform 29. The gas turbine platform 29 can in turn be supported by a baseplate 31. The gas turbine 1 may be supported by the gas turbine platform 29 constrained to the baseplate 31. In some embodiments, the gas turbine platform 29 and the baseplate 31 can be a single structure. The driven equipment may be supported by a load platform constrained to the baseplate 31.

In Fig. 2 an exit diffuser scroll case 33 of the low pressure compressor 3 and an inlet collector scroll case 35 of the high pressure compressor 5 are shown. The exit diffuser scroll case 33 is connected, through a duct 32 and a flexible joint 37 arranged there along, to the intercooler 19 and partly pressurized air flows there through into the intercooler 19.

The inlet collector scroll case 35 is connected to the intercooler 19 through a duct 34 and a flexible joint 39 arranged along the latter.

In some embodiments the intercooler 19 is supported on the deck 25 by a separate intercooler structure schematically shown at 41. The flexible joints 37 and 39 compensate for possible misalignments or displacements between the intercooler 19 and the exit diffuser scroll case 33 as well as the inlet collector scroll case 35 of the gas turbine 1, respectively. Said misalignments and/or displacements might be caused by flexural deformations of the deck 25, accelerations due to sea motion and operating loads imposed by the gas turbine. The flexible joints 37 and 39 allow therefore the gas turbine 1 to be mounted on a baseplate 31, which is separate from the baseplate, platform or structure 41 whereon the intercooler 19 is supported.

In some embodiments the baseplate 31 can be supported on the deck 25 with a multipoint connection system. In other embodiments, a substantially isostatic connection system, for example a three-point support system is preferably used, whereby the baseplate 31 is connected to the deck 25 by means of three joints. The joints can be spherical joints, also named gimbals, or anti-vibration mounts, also named AVM. This kind of connection guarantees a deck connection free from deformations of the baseplate induced by local deck deflections. Each joint is constructed and arranged such as to provide a connection between the baseplate and the deck, with only some translation displacements allowed.

In some embodiments the three joints are arranged at the vertices of an isosceles triangle. In Figs.2 and 2A a preferred arrangement of three joints 32A, 32B, 32C is shown. A first joint 32A is arranged approximately at the centerline of the gas turbine 1. A second joint 32B and a third joint 32C are arranged in preferably symmetrical locations with respect to a centerline, under the load, preferably in an intermediate location along the axial development of the load, and more preferably about under the center of gravity of the load.

In particularly advantageous embodiments, the first joint 32A is located under the gas turbine 1 approximately between the exit diffuser scroll case 33 and the inlet collector scroll case 35, i.e. in alignment with the connection between the gas turbine 1 and the intercooler 19.

In Fig. 2 further auxiliaries or components of the gas turbine system are shown. More specifically, the gas turbine 1 can be provided with a bleeding system 43 which is provided on the duct 32 connecting the exit diffuser scroll case 33 to the intercooler 19. In other embodiment, the bleeding system 43 is directly connected to the intercooler body. The bleeding system 43 is provided for bleeding partly compressed air from the low pressure compressor 3 under certain operating conditions. The bleeding system 43 can be provided with a bleeding stack 45 that may include a silencer arrangement. The bleeding stack 45 and relevant auxiliaries, such as the silencer arrangement, can be supported directly on the deck 25, or on a separate platform or baseplate (not shown), separately from the baseplate 31, which supports the gas turbine 1. A further flexible joint 38 can be provided between the bleeding system 43 and the gas turbine 1 on the duct connecting the exit diffuser scroll case 33 to the intercooler 19. A variable bleed valve 46 can be provided for adjusting the amount of bleeding.

In Fig. 2, at the cold end of the gas turbine, an inlet plenum 47 is further shown, connecting the gas turbine 1 with a filter house 49. The filter house 49 contains filter arrangements filtering combustion air ingested by compressor 3 as well as ventilation air for cooling the gas turbine enclosure 27.

In some embodiments the filter house 49 can be directly supported on the deck 25.

A connection 51 is arranged between the filter house 49 and the gas turbine enclosure 27. In some embodiments the connection 51 can be sufficiently flexible to compensate for possible flexural deformations of the deck 25 and consequent misalignments or displacements of the filter house 49 with respect to the baseplate 31 whereon the gas turbine 1 is supported. In other embodiments a flexible joint is arranged between the filter house 49 and the gas turbine enclosure 27, so that the system becomes more tolerant to deformations or displacements.

In Fig. 2 an exhaust plenum 53 is shown at the hot end of the gas turbine 1. The exhaust plenum 53 is connected to an exhaust stack 55, which can be supported on the deck 25 directly or through a baseplate or platform, not shown. A flow connection 57 is provided between the exhaust plenum 53 and the exhaust stack 55. The connection 57 compensates for possible displacements or misalignments due to flexural deformations of the deck 25.

In the embodiment of Fig. 2 the gas turbine 1 drives into rotation a driven equipment or load comprising a first compressor 57 and a second compressor 59 arranged in series and connected to one another through a common shaft line 61. The shaft line 61 is connected to the load coupling 21 of the gas turbine 1. The mechanical connection between the shaft line 61 and the load coupling 21 can be through a flexible joint with or without an intermediate gearbox, as will be disclosed in greater detail later on with reference to some possible embodiments of the load connection.

In some embodiments the driven equipment, such as the compressors 57 and 59, can be supported on a driven equipment platform 63, which is in turn supported on the baseplate 31.

Two driven equipment platforms 63A, 63B are provided in the embodiment of Fig. 2. In other embodiments, not shown, a single driven equipment platform can be provided, whereon two or more rotary machines, e.g. centrifugal compressors, are arranged.

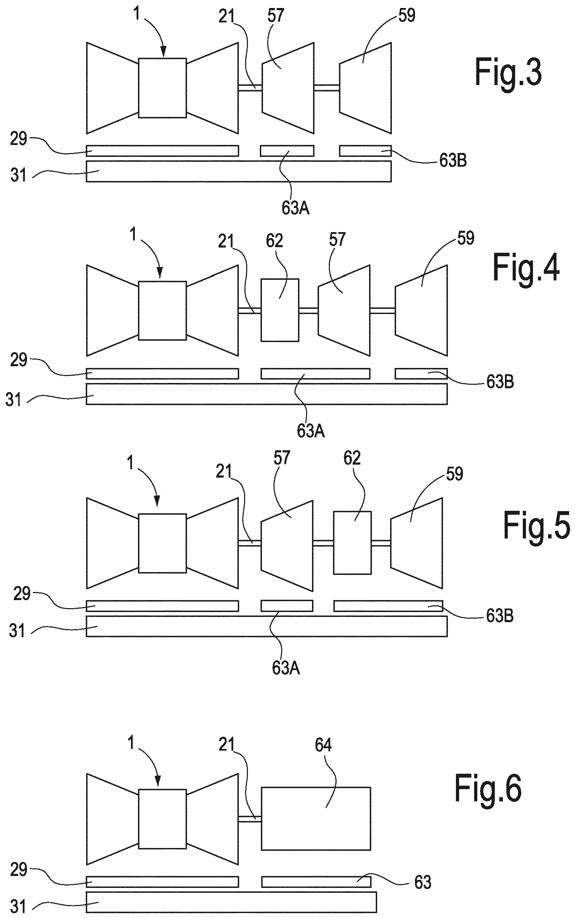

Figs. 3 to 12 schematically illustrate various possible arrangements of the machinery arranged on the baseplate 31, namely the gas turbine 1 and the driven equipment mechanically connected thereto.

Fig. 3 illustrates an arrangement corresponding to the one shown in more detail in Fig. 2. The same reference numbers designate the same or corresponding components, parts or elements.

Fig. 4 illustrates an embodiment wherein a gearbox 62 is arranged between the load coupling 21 of the gas turbine 1 and the first compressor 57. In the embodiment shown in Fig. 4 the two compressors 57 and 59 are supported by separate platforms 63A and 63B, the first platform 63A also supporting the gearbox 62. In other embodiments, the three pieces of machinery 62, 57 and 59 could be supported by a single platform mounted on the baseplate 31. In yet further embodiments, the gearbox 62 can be supported on a platform separate from the platform(s) which support the compressors.

Fig. 5 illustrates a modified embodiment similar to the embodiment of Fig. 4 but wherein, differently from Fig. 4, the gearbox 62 is arranged between the first compressor 57 and the second compressor 59. The gearbox 62 can be supported by the platform 63B whereon the compressor 59 is located. In other embodiments the gearbox 62 can be supported by the first platform 63A whereon the first compressor 57 is arranged. In yet further embodiments a single platform can be provided supporting the two compressors 57, 59 as well as the intermediate gearbox 62.

In Fig. 6 an embodiment is shown, wherein the gas turbine 1 drives an electric generator 64 directly connected to the load coupling 21 of the gas turbine 1. The electric generator 64 can be supported by a platform 63, in turn supported on the baseplate 31.

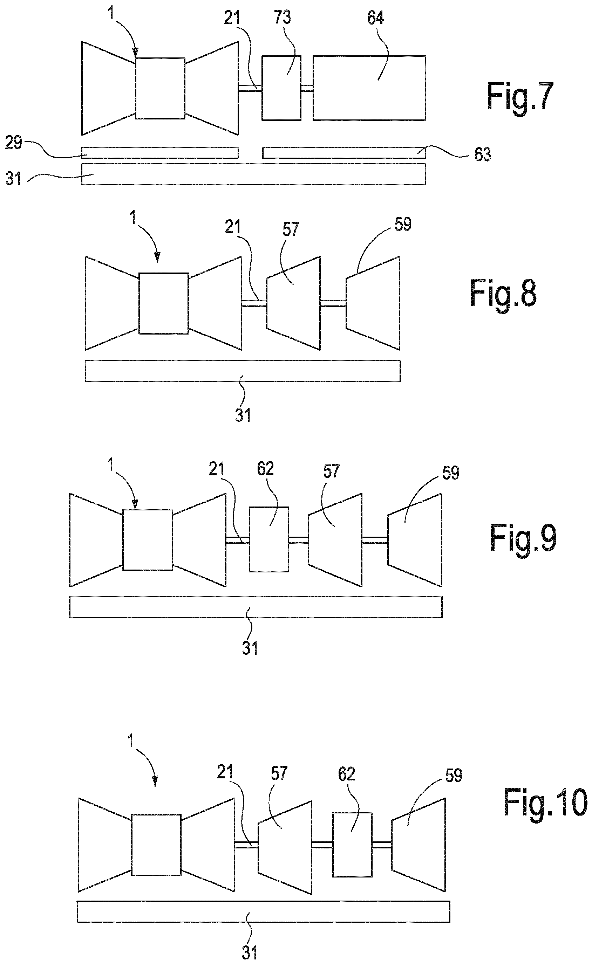

Fig. 7 illustrates a further embodiment, similar to the embodiment of Fig. 6, wherein however a gearbox 73 is arranged between the load coupling 21 of the gas turbine 1 and the electric generator 64. The gearbox 73 can be supported by the same platform 63 which supports the electric generator 64.

In the previously described embodiments the pieces of machinery, including the gas turbine 1 and the driven equipment, are supported indirectly on the baseplate 31, with the interposition of one or more intermediate platforms 21, 63, 63A, 63B. In further embodiments the rotary machinery can be supported directly on the baseplate 31. In Fig. 8, for example, the same pieces of machinery as in Fig. 3 are directly supported on the baseplate 31. In this exemplary embodiment the gas turbine 1 again drives two sequentially arranged compressors 57 and 59 through the load coupling 21.

In Fig. 9 the same pieces of machinery as in Fig. 4, namely the gas turbine 1, the two compressors 57, 59 and the gearbox 62, are directly mounted on the baseplate 31.

Fig. 10 illustrates a modified embodiment, similar to the embodiment of Fig. 5, wherein the gas turbine 1, the first compressor 57, the second compressor 59 and the intermediate gearbox 62 are directly mounted on the baseplate 31.

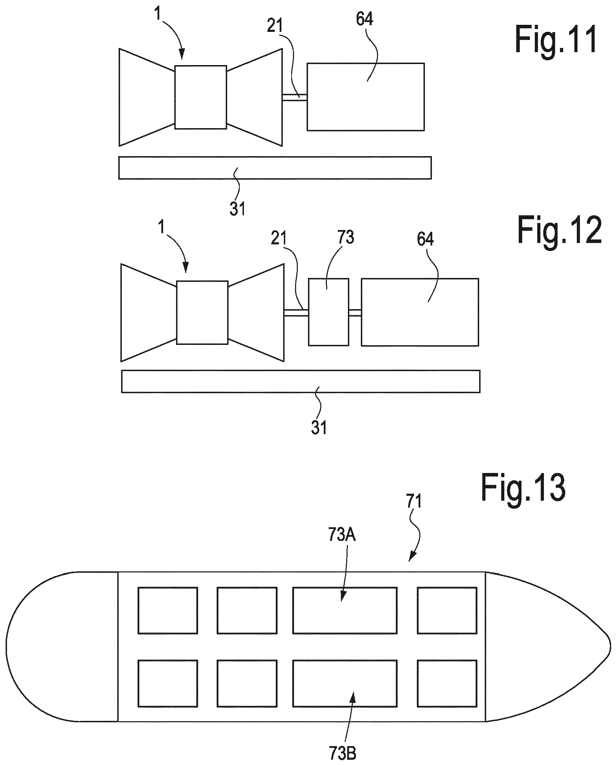

According to a further embodiment, shown in Fig. 11, the gas turbine 1 drives an electric generator 64, similarly to the embodiment of Fig. 6. However, in the embodiment of Fig.11 the gas turbine 1 as well as the electric generator 64 are mounted directly on the baseplate 31, without any intermediate platform there between.

Finally, in Fig. 12 an arrangement similar to Fig. 7 is show, wherein a gearbox 73 is placed between the load coupling 21 of the gas turbine 1 and the electric generator 64.

The gas turbine 1, the gearbox 73 and the electric generator 64 are directly mounted on the baseplate 31.

In some embodiments different driven equipment can be provided, for example a single compressor or a compressor train comprising more than two compressors. In yet further embodiments, not shown, the gas turbine can drive one or more compressors and one or more electric generators in combination.

In some embodiments, the compressor or compressors can be centrifugal compressors, for instance refrigerant compressors for an LNG system used for liquefying a natural gas which is then pumped from the offshore platform or vessel, whereon the gas turbine 1 and relevant driven equipment are arranged, in an LNG vessel for transportation purposes.

Fig. 13 illustrates a schematic top view of a vessel 71, whereon two gas turbine systems and relevant driven equipment as described above are located. The two gas turbine and driven equipment arrangements are labeled 73A and 73B. They can be arranged according to a longitudinal orientation in a fore-and-aft direction.

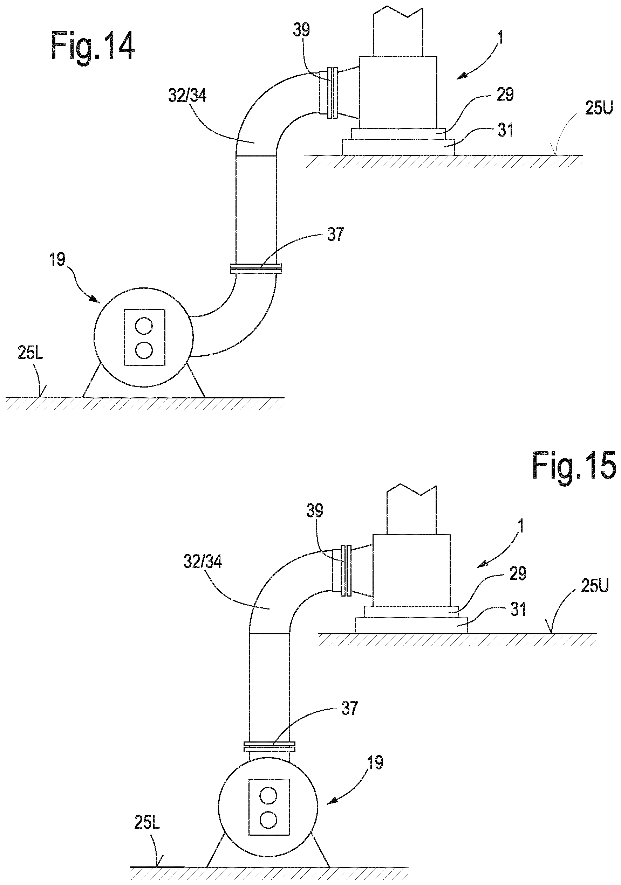

In the embodiment described in connection with Figs 2 and 2A, the intercooler 19, the gas turbine 1 and the driven equipment 57, 59 are arranged on the same deck 25 of the floating structure. A different arrangement can, however, be provided, for example for space-saving purposes. Figs. 14-17 schematically illustrate five different alternative layouts, wherein the intercooler 19 and the gas turbine 1 are located at different levels, on different decks of the floating structure, in order to reduce the overall footprint of the installation. All figures are highly schematic and illustrate the main components of the installation in a front view.

In Figs. 14-17 the gas turbine 1 and the baseplate 31 are arranged on an upper deck 25U. The intercooler 19 is arranged on a lower deck 25L. The ducts 32, 34 with the relevant flexible joints 37, 38, 39 extend at least partly vertically for connecting the gas turbine 1 arranged at the upper level with the intercooler 19 arranged at the lower level.

In Fig.14 the intercooler 19 and the baseplate 1 are laterally shifted, so that the intercooler 19 is not arranged under the gas turbine 1, but on a side thereof and at a lower level. The ducts 32, 34 have both a double curve.

In Fig.15 the arrangement is similar to Fig.14, but the lateral shift of the intercooler 19 with respect to the baseplate 31 and the gas turbine 1 is smaller and only one curve is provided along each duct 32, 34.

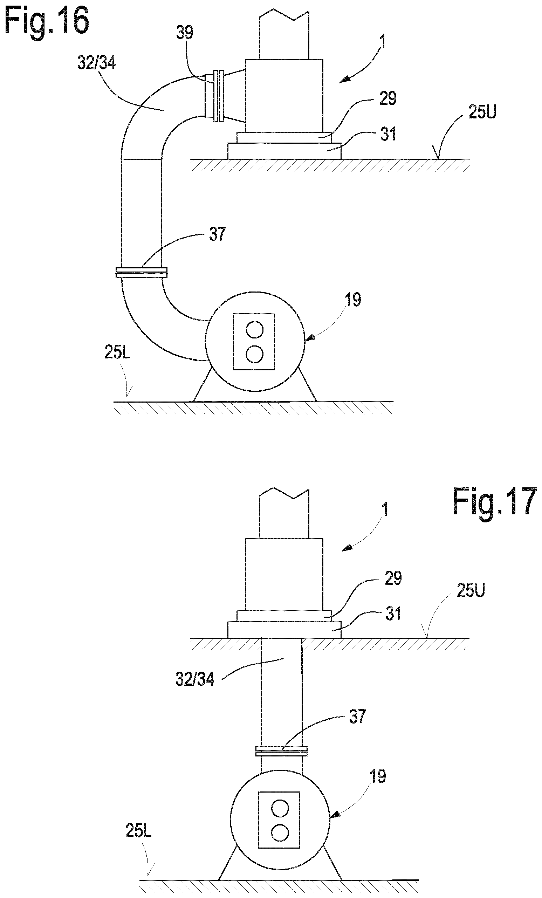

In Figs. 16 and 17 the intercooler 19 is arranged under the baseplate 31 and the gas turbine 1. A curved connection between the intercooler 19 and the gas turbine 1 in Fig.16, whereas in the arrangement of Fig. 17, a straight, vertical connection is provided.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims. Hence, the proper scope of the disclosed innovations should be determined only by the broadest interpretation of the appended claims so as to encompass all such modifications, changes, and omissions.

## Claims

1. An off-shore gas turbine system comprising a floating structure with at least one deck (25) and a baseplate (31) mounted on said deck (25);
wherein the baseplate (31) supports:
a gas turbine (1) having: a low pressure compressor (3), a high pressure compressor (5), a combustor (7), a high pressure turbine (9), an intermediate pressure turbine (11) and a low pressure turbine (13); the low pressure compressor (3) being driven into rotation by the intermediate pressure turbine (11) and the high pressure compressor (5) being driven by the high pressure turbine (9); the low pressure turbine (13) having a load coupling (21);
at least one driven equipment mechanically connected to the load coupling (21) of the low pressure turbine (13) and driven into rotation by said low pressure turbine (13);
wherein an intercooler (19) is provided between the low pressure compressor (3) and the high pressure compressor (5), air at a first pressure value delivered by the low pressure compressor (3) flowing through the intercooler (19) before being delivered to the high pressure compressor (5); and
wherein said baseplate (31) is supported on said deck (25) separately from the intercooler (19); and the intercooler (19) is connected to an exit diffuser scroll case (33) of the low-pressure compressor (3) and to an inlet collector scroll case (35) of the high pressure compressor (5) through respective displacement-tolerant fluid connections (37,39)4.

2. The gas turbine system of claim 1, wherein a variable bleed valve system (46) is arranged between the exit diffuser scroll case (33) of the low-pressure compressor (3) and the intercooler (19) or on the intercooler (19) itself, said variable bleed valve system (46) comprising a stack and silencer arrangement, supported on the deck (25) separately from the baseplate (31).

3. The gas turbine system of claim 1 or 2, wherein the baseplate (31) is connected to the deck (25) with a substantially isostatic connection.

4. The gas turbine system of claim 1, 2 or 3, wherein the baseplate (31) is connected to the deck (25) by means of a three-point connection.

5. The gas turbine system of claim 4, wherein said three-point connection comprises three joints (32A,32B,32C) arranged under the baseplate (31) and between the baseplate (31) and the deck (25) of the floating structure and are positioned preferably at the vertices of a substantially isosceles triangle.

6. The gas turbine system of claim 4, wherein said three-point connection comprises a first joint (32A), a second joint (32B) and a third joint (32C); wherein the first joint (32A) is arranged under the turbine (1), approximately along a centerline thereof and approximately at a flow connection between the gas turbine (1) and the intercooler (19); and wherein the second joint (32B) and the third joint (32C) are arranged under the driven equipment.

7. The gas turbine system of any one of the preceding claims, wherein said driven equipment comprises at least one compressor (57,59).

8. The gas turbine system of claim 7, wherein said at least one compressor (57, 59) is connected through a gearbox to the load coupling (21) of the low pressure turbine (3).

9. The gas turbine system of claim 7, wherein said driven equipment comprises at least a first compressor (57) and a second compressor (59) arranged in series; and wherein a gearbox (62) is arranged between the gas turbine (1) and the first compressor (57).

10. The gas turbine system of claim 7, wherein said driven equipment comprises at least a first compressor (57) and a second compressor (59) arranged in series; and wherein a gearbox (62) is arranged between the first compressor (57) and the second compressor (59).

11. The gas turbine system of any one of the preceding claims, wherein said gas turbine (1) is supported by a gas turbine platform (29) constrained to the baseplate (31).

12. The gas turbine system of any one of the preceding claims, wherein said driven equipment is supported by a load platform constrained to the baseplate (31).

13. The gas turbine system of any one of the preceding claims, wherein said driven equipment comprises a first compressor (57) and a second compressor (59), and wherein each said first compressor (57) and said second compressor (59) are supported by a respective first compressor platform (63A) and second compressor platform (63B), said first compressor platform (63A) and said second compressor platform (63B) being connected to the baseplate (31).

14. The gas turbine system of any one of the preceding claims, wherein said baseplate (31) and said intercooler (19) are placed both on said at least one deck (25).

15. The gas turbine system of any one of the preceding claims, wherein said intercooler (19) is placed on a second deck (25L) at a different level than said at least one deck (25).

16. The gas turbine system of one of the preceding claims, wherein the displacement - tolerant fluid connections (37,39) are arranged to compensate for possible misalignments or displacements between the intercooler (19) and the exit diffuser scroll case (33) as well as the inlet collector scroll case (35) of the gas turbine (1) respectively caused by flexural deformations of the deck (25), accelerations due to sea motion and operating loads imposed by the gas turbine (1).

## Patentansprüche

1. Offshore-Gasturbinensystem, umfassend eine schwimmende Struktur mit mindestens einem Deck (25) und einer auf dem Deck (25) montierten Grundplatte (31);
wobei die Grundplatte (31) stützt:
eine Gasturbine (1), aufweisend: einen Niederdruckverdichter (3), einen Hochdruckverdichter (5), eine Brennkammer (7), eine Hochdruckturbine (9), eine Mitteldruckturbine (11) und eine Niederdruckturbine (13); wobei der Niederdruckverdichter (3) durch die Zwischendruckturbine (11) in Rotation versetzt wird und der Hochdruckverdichter (5) durch die Hochdruckturbine (9) angetrieben wird; wobei die Niederdruckturbine (13) eine Lastkopplung (21) aufweist;
wobei mindestens eine angetriebene Einrichtung mechanisch mit der Lastkopplung (21) der Niederdruckturbine (13) verbunden ist und durch die Niederdruckturbine (13) in Rotation versetzt wird;
wobei ein Zwischenkühler (19) zwischen dem Niederdruckverdichter (3) und dem Hochdruckverdichter (5) bereitgestellt ist, wobei Luft mit einem ersten Druckwert, die von dem Niederdruckverdichter (3) geliefert wird, durch den Zwischenkühler (19) strömt, bevor sie an den Hochdruckverdichter (5) geliefert wird; und
wobei die Grundplatte (31) auf dem Deck (25) getrennt von dem Zwischenkühler (19) gestützt wird; und der Zwischenkühler (19) mit einem Austrittsdiffusor-Spiralgehäuse (33) des Niederdruckverdichters (3) und mit einem Eintrittssammler-Spiralgehäuse (35) des Hochdruckverdichters (5) durch jeweilige verschiebungstolerante Fluidverbindungen (37, 39)4 verbunden ist.

2. Gasturbinensystem nach Anspruch 1, wobei ein variables Entlüftungsventilsystem (46) zwischen dem Austrittsdiffusor-Spiralgehäuse (33) des Niederdruckverdichters (3) und dem Zwischenkühler (19) oder am Zwischenkühler (19) selbst angeordnet ist, wobei das variable Entlüftungsventilsystem (46) eine Schornstein- und Schalldämpferanordnung umfasst, die auf dem Deck (25) getrennt von der Grundplatte (31) gestützt wird.

3. Gasturbinensystem nach Anspruch 1 oder 2, wobei die Grundplatte (31) mit dem Deck (25) mit einer im Wesentlichen isostatischen Verbindung verbunden ist.

4. Gasturbinensystem nach Anspruch 1, 2 oder 3, wobei die Grundplatte (31) mit dem Deck (25) mittels einer Dreipunktverbindung verbunden ist.

5. Gasturbinensystem nach Anspruch 4, wobei die Dreipunktverbindung drei Verbindungsstücke (32A, 32B, 32C) umfasst, die unter der Grundplatte (31) und zwischen der Grundplatte (31) und dem Deck (25) der schwimmenden Struktur angeordnet sind und vorzugsweise an den Scheitelpunkten eines im Wesentlichen gleichschenkligen Dreiecks positioniert sind.

6. Gasturbinensystem nach Anspruch 4, wobei die Dreipunktverbindung ein erstes Verbindungsstück (32A), ein zweites Verbindungsstück (32B) und ein drittes Verbindungsstück (32C) umfasst; wobei das erste Verbindungsstück (32A) unter der Turbine (1), etwa entlang einer Mittellinie davon und etwa an einer Strömungsverbindung zwischen der Gasturbine (1) und dem Zwischenkühler (19) angeordnet ist; und wobei das zweite Verbindungsstück (32B) und das dritte Verbindungsstück (32C) unter der angetriebenen Einrichtung angeordnet sind.

7. Gasturbinensystem nach einem der vorstehenden Ansprüche, wobei die angetriebene Einrichtung mindestens einen Verdichter (57, 59) umfasst.

8. Gasturbinensystem nach Anspruch 7, wobei der mindestens eine Verdichter (57, 59) durch ein Getriebe mit der Lastkopplung (21) der Niederdruckturbine (3) verbunden ist.

9. Gasturbinensystem nach Anspruch 7, wobei die angetriebene Einrichtung mindestens einen ersten Verdichter (57) und einen zweiten Verdichter (59) umfasst, die in Reihe angeordnet sind; und wobei ein Getriebe (62) zwischen der Gasturbine (1) und dem ersten Verdichter (57) angeordnet ist.

10. Gasturbinensystem nach Anspruch 7, wobei die angetriebene Einrichtung mindestens einen ersten Verdichter (57) und einen zweiten Verdichter (59) umfasst, die in Reihe angeordnet sind; und wobei ein Getriebe (62) zwischen dem ersten Verdichter (57) und dem zweiten Verdichter (59) angeordnet ist.

11. Gasturbinensystem nach einem der vorstehenden Ansprüche, wobei die Gasturbine (1) von einer Gasturbinenplattform (29) gestützt wird, die auf die Grundplatte (31) beschränkt ist.

12. Gasturbinensystem nach einem der vorstehenden Ansprüche, wobei die angetriebene Einrichtung von einer Lastplattform gestützt wird, die auf die Grundplatte (31) beschränkt ist.

13. Gasturbinensystem nach einem der vorstehenden Ansprüche, wobei die angetriebene Einrichtung einen ersten Verdichter (57) und einen zweiten Verdichter (59) umfasst, und wobei der erste Verdichter (57) und der zweite Verdichter (59) jeweils von einer jeweiligen ersten Verdichterplattform (63A) und zweiten Verdichterplattform (63B) gestützt werden, wobei die erste Verdichterplattform (63A) und die zweite Verdichterplattform (63B) mit der Grundplatte (31) verbunden sind.

14. Gasturbinensystem nach einem der vorstehenden Ansprüche, wobei die Grundplatte (31) und der Zwischenkühler (19) beide auf dem mindestens einen Deck (25) platziert sind.

15. Gasturbinensystem nach einem der vorstehenden Ansprüche, wobei der Zwischenkühler (19) auf einem zweiten Deck (25L) auf einem anderen Niveau als das mindestens eine Deck (25) platziert ist.

16. Gasturbinensystem nach einem der vorstehenden Ansprüche, wobei die verschiebungstoleranten Fluidverbindungen (37, 39) so angeordnet sind, dass sie mögliche Fehlausrichtungen oder Verschiebungen zwischen dem Zwischenkühler (19) und dem Austrittsdiffusor-Spiralgehäuse (33) sowie dem Eintrittssammler-Spiralgehäuse (35) der Gasturbine (1) ausgleichen, die jeweils durch Biegeverformungen des Decks (25), Beschleunigungen aufgrund von Meeresbewegungen und Betriebslasten, die von der Gasturbine (1) auferlegt werden, verursacht werden.

## Revendications

1. Système de turbine à gaz off-shore comprenant une structure flottante avec au moins un pont (25) et une plaque de base (31) montée sur ledit pont (25) ;
dans lequel la plaque de base (31) supporte :
une turbine à gaz (1) comportant : un compresseur basse pression (3), un compresseur haute pression (5), une chambre de combustion (7), une turbine haute pression (9), une turbine à pression intermédiaire (11) et une turbine basse pression (13) ; le compresseur basse pression (3) étant entraîné en rotation par la turbine à pression intermédiaire (11) et le compresseur haute pression (5) étant entraîné par la turbine haute pression (9) ; la turbine basse pression (13) présentant un couplage de charge (21) ;
au moins un équipement entraîné relié mécaniquement au couplage de charge (21) de la turbine basse pression (13) et entraîné en rotation par ladite turbine basse pression (13) ;
dans lequel un refroidisseur intermédiaire (19) est prévu entre le compresseur basse pression (3) et le compresseur haute pression (5), de l'air à une première valeur de pression délivrée par le compresseur basse pression (3) s'écoulant à travers le refroidisseur intermédiaire (19) avant d'être délivré au compresseur haute pression (5) ; et
dans lequel ladite plaque de base (31) est supportée sur ledit pont (25) séparément du refroidisseur intermédiaire (19) ; et le refroidisseur intermédiaire (19) est connecté à un carter de volute de diffuseur de sortie (33) du compresseur basse pression (3) et à un carter de volute de collecteur d'entrée (35) du compresseur haute pression (5) par des connexions de fluide tolérantes au déplacement respectives (37, 39)4.

2. Système de turbine à gaz selon la revendication 1, dans lequel un système de soupape de purge variable (46) est disposé entre le carter de volute de diffuseur de sortie (33) du compresseur basse pression (3) et le refroidisseur intermédiaire (19) ou sur le refroidisseur intermédiaire (19) lui-même, ledit système de soupape de purge variable (46) comprenant un agencement de pile et de silencieux, supporté sur le pont (25) séparément de la plaque de base (31).

3. Système de turbine à gaz selon la revendication 1 ou 2, dans lequel la plaque de base (31) est reliée au pont (25) avec une connexion sensiblement isostatique.

4. Système de turbine à gaz selon la revendication 1, 2 ou 3, dans lequel la plaque de base (31) est reliée au pont (25) au moyen d'une connexion à trois points.

5. Système de turbine à gaz selon la revendication 4, dans lequel ladite connexion à trois points comprend trois joints (32A, 32B, 32C) disposés sous la plaque de base (31) et entre la plaque de base (31) et le pont (25) de la structure flottante et sont positionnés de préférence aux sommets d'un triangle sensiblement isocèle.

6. Système de turbine à gaz selon la revendication 4, dans lequel ladite connexion à trois points comprend un premier joint (32A), un deuxième joint (32B) et un troisième joint (32C) ; dans lequel le premier joint (32A) est agencé sous la turbine (1), approximativement le long d'une ligne centrale de celui-ci et approximativement à une connexion d'écoulement entre la turbine à gaz (1) et le refroidisseur intermédiaire (19) ; et dans lequel le deuxième joint (32B) et le troisième joint (32C) sont agencés sous l'équipement entraîné.

7. Système de turbine à gaz selon l'une quelconque des revendications précédentes, dans lequel ledit équipement entraîné comprend au moins un compresseur (57, 59).

8. Système de turbine à gaz selon la revendication 7, dans lequel ledit au moins un compresseur (57, 59) est relié par l'intermédiaire d'une boîte de vitesses au couplage de charge (21) de la turbine basse pression (3).

9. Système de turbine à gaz selon la revendication 7, dans lequel ledit équipement entraîné comprend au moins un premier compresseur (57) et un second compresseur (59) agencés en série ; et dans lequel une boîte de vitesses (62) est disposée entre la turbine à gaz (1) et le premier compresseur (57).

10. Système de turbine à gaz selon la revendication 7, dans lequel ledit équipement entraîné comprend au moins un premier compresseur (57) et un second compresseur (59) agencés en série ; et dans lequel une boîte de vitesses (62) est disposée entre le premier compresseur (57) et le second compresseur (59).

11. Système de turbine à gaz selon l'une quelconque des revendications précédentes, dans lequel ladite turbine à gaz (1) est supportée par une plate-forme de turbine à gaz (29) contrainte à la plaque de base (31).

12. Système de turbine à gaz selon l'une quelconque des revendications précédentes, dans lequel ledit équipement entraîné est supporté par une plate-forme de charge contrainte à la plaque de base (31).

13. Système de turbine à gaz selon l'une quelconque des revendications précédentes, dans lequel ledit équipement entraîné comprend un premier compresseur (57) et un second compresseur (59), et dans lequel chacun desdits premier compresseur (57) et second compresseur (59) sont supportés par une première plate-forme de compresseur (63A) et une deuxième plate-forme de compresseur (63B) respectives, ladite première plate-forme de compresseur (63A) et ladite deuxième plate-forme de compresseur (63B) étant reliée à la plaque de base (31).

14. Système de turbine à gaz selon l'une quelconque des revendications précédentes, dans lequel ladite plaque de base (31) et ledit refroidisseur intermédiaire (19) sont placés tous deux sur ledit au moins un pont (25).

15. Système de turbine à gaz selon l'une quelconque des revendications précédentes, dans lequel ledit refroidisseur intermédiaire (19) est placé sur un second pont (25L) à un niveau différent dudit au moins un pont (25).

16. Système de turbine à gaz selon l'une quelconque des revendications précédentes, dans lequel les connexions de fluide tolérantes au déplacement (37, 39) sont agencées pour compenser d'éventuels désalignements ou déplacements entre le refroidisseur intermédiaire (19) et le boîtier de volute de diffuseur de sortie (33) ainsi que le boîtier de volute de collecteur d'entrée (35) de la turbine à gaz (1) respectivement provoqués par des déformations en flexion du pont (25), des accélérations dues au mouvement de la mer et aux charges de fonctionnement imposées par la turbine à gaz (1).
